# EUROPÄISCHE PATENTSCHRIFT

(11) **EP 3 412 947 B1**
(45) Veröffentlichungstag und Bekanntmachung des Hinweises auf die Patenterteilung: **22.01.2020**
(21) Anmeldenummer: 18170909.8
(22) Anmeldetag: 04.05.2018
(51) Int. Cl.: F16K 37/00, F16B 4/00, F16K 7/12, F16K 11/20, F16K 27/02, G06K 19/07

(54) **MEHRWEGE-VENTILKÖRPER UND VERFAHREN ZUM HERSTELLEN DES MEHRWEGE-VENTILKÖRPERS**
MULTIPATH VALVE BODY AND METHOD FOR PRODUCING THE MULTIPATH VALVE BODY
CORPS DE SOUPAPE À PLUSIEURS VOIES ET PROCÉDÉ DE FABRICATION DU CORPS DE SOUPAPE À PLUSIEURS VOIES

(30) Priorität: 08.06.2017 DE 102017112667
(43) Veröffentlichungstag der Anmeldung: 12.12.2018
(73) Patentinhaber: GEMÜ Gebr. Müller Apparatebau GmbH & Co. Kommanditgesellschaft, 74653 Ingelfingen (DE)
(72) Erfinder: Stier, Peter, 74677 Dörzbach (DE); Wagner, Jürgen, 74676 Niedernhall (DE)
(74) Vertreter: DREISS Patentanwälte PartG mbB

(56) Entgegenhaltungen:
- EP-A2- 2 366 922
- WO-A1-2016/192970
- CN-U- 203 224 896
- DE-A1-102013 002 242
- DE-A1-102013 214 304
- JP-A- 2007 162 805
- KR-B1- 100 832 162

## Beschreibung

Die Erfindung betrifft einen Mehrwege-Ventilkörper nach dem Oberbegriff des Anspruchs 1 sowie ein Verfahren zum Herstellen des Mehrwege-Ventilkörpers nach dem Oberbegriff eines nebengeordneten Anspruches.

Mehrwege-Ventilkörper für fluidtechnische Prozesse sind allgemein bekannt. Aufwändige Schweißkonstruktionen, bei denen einzelne Ventilkörper mit jeweils einem Ventilsitz miteinander über Rohre verbunden werden, können durch einen Mehrwege-Ventilkörper ersetzt werden. Durch den Einsatz von Mehrwege-Ventilkörpern wird der Montage- und Validierungsaufwand gesenkt. Darüber hinaus bieten Mehrwege-Ventilblöcke fluidtechnische Vorteile, da beispielsweise Toträume in sonst notwendigen Leitungsabschnitten reduziert werden.

Es ist bekannt, dass mittels elektronischer Datenträger eine eindeutige Zuordnung einzelner Ventilelemente innerhalb einer zentralen Verwaltungseinheit möglich ist.

Funktionale, konstruktive und herstellungsbedingte Randbedingungen erlauben es jedoch nicht, an jeder Stelle eines Mehrwege-Ventilkörpers den elektronischen Datenträger vorzusehen. Insbesondere bei der Herstellung von Mehrwege-Ventilkörpern ist es nicht immer möglich, einen elektronischen Datenträger direkt an dem Mehrwege-Ventilkörper beispielsweise an einer Oberfläche anzuordnen. Dies ergibt sich insbesondere aus der Variantenvielfalt als auch aus der konstruktiven Komplexität einzelner Mehrwege-Ventilkörper.

EP 2 366 922 A2 offenbart einen Ventilknoten mit mehreren Abflüssen und Zuflüssen.

DE 10 2013 002242 A1 offenbart ein Verfahren zur Herstellung eines von einem Medium durch- oder umströmbaren Bauteils.

KR 100 832 162 B1, CN 203 224 896 U und JP 2007 162805 A offenbaren eine Schraube mit einem RFID-Tag.

Mithin ist es Aufgabe der Erfindung, einen Mehrwege-Ventilkörper zu schaffen, der eine kontaktlose Identifikation eines Ventilsitzes ermöglicht.

Die der Erfindung zugrunde liegende Aufgabe wird durch einen Mehrwege-Ventilkörper nach dem Anspruch 1 sowie ein Verfahren zum Herstellen des Mehrwege-Ventilkörpers nach einem nebengeordneten Anspruch gelöst.

Es wird ein Mehrwege-Ventilkörper für eine Ventilanordnung vorgeschlagen, wobei der Mehrwege-Ventilkörper eine Anzahl von Ventilsitzen umfasst, welcher über eine jeweilige Öffnung zugänglich sind, wobei eine Anzahl von Gewindebohrungen um die jeweilige Öffnung herum ausgeführt sind, wobei eine Anzahl erster Stehbolzen zur Anordnung eines Ventilantriebs abschnittsweise in den Gewindebohrungen angeordnet sind. Vorteilhaft umfasst ein zweiter Stehbolzen einen elektronischen Datenträger zur kontaktlosen Identifikation des Ventilsitzes. Der zweite Stehbolzen ist abschnittsweise in einer der Gewindebohrungen angeordnet.

So ist der dem Ventilsitz mittels des zweiten Stehbolzens eindeutig drahtlos identifizierbar. Gleichzeitig wird diese Identifikationsfunktion mit einer Befestigungsfunktion verknüpft, wodurch eine Bauraum-sparende und kostengünstige Lösung geschaffen wird.

Darüber hinaus ist die Anordnung des elektronischen Datenträgers in Bezug zu dem Ventilsitz bei der Herstellung des Mehrwege-Ventilkörpers von zuvor auszuführenden Schritten entkoppelt. Entsprechend kann die Anordnung des elektronischen Datenträgers erst am Ende der Produktion geschehen, was die Freiheitsgrade bei der Fertigung erhöht. Darüber hinaus sind bereits beim Kunden befindliche Mehrwege-Ventilkörper nachrüstbar.

Weitere Vorteile und Merkmale finden sich in der nachfolgenden Beschreibung von Ausführungsbeispielen sowie in der Zeichnung. In der Zeichnung zeigen:
Figur 1 eine Ventilanordnung in perspektivischer Ansicht;
Figur 2 einen Mehrwege-Ventilkörper in perspektivischer Ansicht;
Figuren 3 und 4 jeweils einen Stehbolzen in Schnittansicht; und
Figur 5 ein schematisches Ablaufdiagramm.

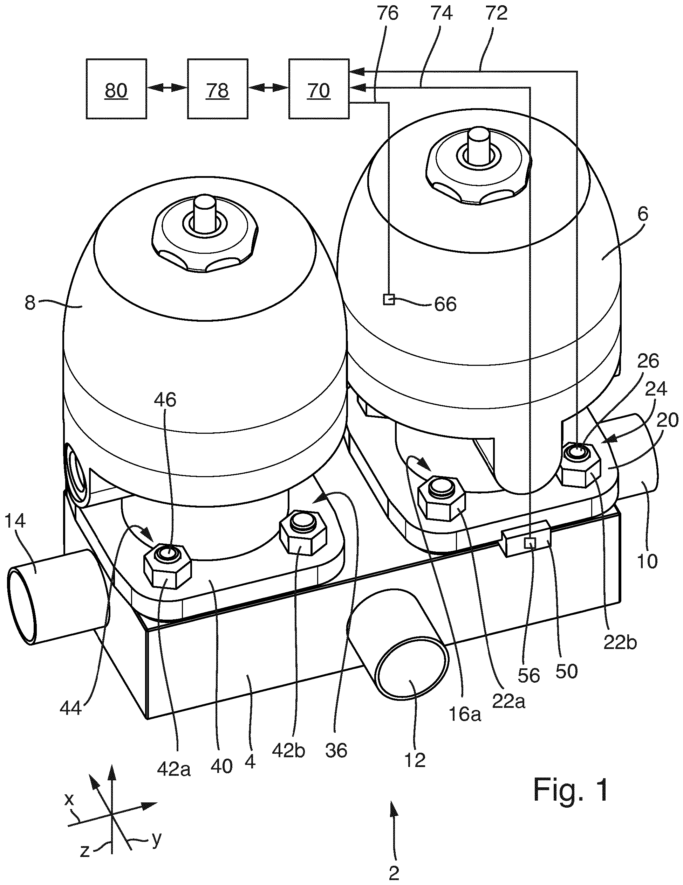

Figur 1 zeigt eine Ventilanordnung 2 in perspektivischer Ansicht mit einem Mehrwege-Ventilkörper 4 und zwei auf dem Mehrwege-Ventilkörper 4 angeordneten Ventilantrieben 6 und 8. Über die jeweilige Aktuierung der Ventilantriebe 6 und 8 wird eine jeweilige Membran gegen einen Ventilsitz an einen Dichtsteg gedrückt und damit der Durchfluss des strömenden Prozessfluids zwischen Ventilanschlüssen 10, 12 und 14 geregelt oder abgesperrt. Beispiele für Prozessfluide umfassen Gase und Flüssigkeiten. Der Mehrwege-Ventilkörper 4 ist beispielsweise aus Edelstahl hergestellt. Der in den Figuren gezeigte Mehrwege-Ventilkörper 4 ist nur eine von mehreren möglichen Ausführungsformen eines Mehrwege-Ventilkörpers. So kann ein kundenspezifischer Mehrwege-Ventilkörper noch weitere Ventilanschlüsse, Ventilsitze und dazwischen angeordnete Fluiddurchgänge umfassen. Die Ventilanschlüsse, Ventilsitze und Fluiddurchgänge können auch unterschiedliche Abmessungen aufweisen.

Ein erster Stehbolzen 16a ist in einer Gewindebohrung des Mehrwege-Ventilkörpers 4 abschnittsweise eingeschraubt und steht so weit von dem Mehrwege-Ventilkörper 4 ab, sodass dieser durch eine Durchgangsbohrung eines Flansches 20 des ersten Ventilantriebs 6 ragt, um den ersten Ventilantriebs 6 mittels einer Mutter 22a zu dem Mehrwege-Ventilkörper 4 festzulegen. Gleichzeitig wird die zugeordnete Membran zwischen dem Mehrwege-Ventilkörper 4 und dem ersten Ventilantrieb 6 verklemmt. Ein zweiter Stehbolzen 24 ist in einer Gewindebohrung des Mehrwege-Ventilkörpers 4 abschnittsweise eingeschraubt und umfasst einen elektronischen Datenträger 26 zur kontaktlosen Identifikation des Ventilsitzes.

Ein dritter Stehbolzen 36a ist in einer weiteren Gewindebohrung des Mehrwege-Ventilkörpers 4 abschnittsweise eingeschraubt und steht so weit von dem Mehrwege-Ventilkörper 4 ab, sodass dieser durch eine Durchgangsbohrung eines Flansches 40 des zweiten Ventilantriebs 8 ragt, um den zweiten Ventilantrieb 8 mittels einer Mutter 42a zu dem Mehrwege-Ventilkörper 4 festzulegen. Gleichzeitig wird die zugeordnete Membran zwischen dem Mehrwege-Ventilkörper 4 und dem zweiten Ventilantrieb 8 verklemmt. Ein vierter Stehbolzen 44 ist in einer der weiteren Gewindebohrungen des Mehrwege-Ventilkörpers 4 abschnittsweise eingeschraubt und umfasst einen weiteren elektronischen Datenträger 46 zur kontaktlosen Identifikation des Ventilsitzes.

Die zwischen Mehrwege-Ventilkörper 4 und dem ersten Ventilantrieb 6 verklemmte Membran weist eine nach außen abragende Lasche 50 auf, in welcher ein elektronischer Datenträger 56 angeordnet ist. An geeigneter Stelle ist an dem Ventilantrieb 6 ein elektronischer Datenträger 66 angeordnet, was vorliegend nur schematisch dargestellt ist. Mittels eines mobilen Lesegeräts 70 können Kennungen 72, 74 und 76 ausgelesen werden, um in einer zentralen Verwaltungseinheit 78 zusammengeführt zu werden. Die zentrale Verwaltungseinheit 78 kommuniziert mit einer in einem Weitverkehrsnetz angeordneten Netzwerkeinheit 80. In der zentralen Verwaltungseinheit 78 wird die gemeinsame Verwendung des ersten Ventilantriebs 6 mit einer jeweiligen Membran an dem durch den Stehbolzen 24 identifizierbaren Ventilsitz abgespeichert, was eine Nachverfolgung und Inventarisierung der einzelnen Komponenten im Betrieb ermöglicht. Über die Netzwerkeinheit 80 wird die Nachverfolgbarkeit der einzelnen Komponenten bis zur Produktion ermöglicht.

Bei den Datenträgern 26, 46, 56, 66 kann es sich um jegliches elektronische Bauteil handeln, auf dem Daten abgespeichert und wieder ausgelesen werden können. Insbesondere kann es sich bei dem Datenträger 26, 46, 56, 66 um einen sogenannten RFID-Chip (RFID = radio frequency identification) handeln, der üblicherweise einen Transponder aufweist, in den Daten eingeschrieben werden können, die dann von einem Lesegerät mit Hilfe von elektrischen Wellen oder Pulsen ausgelesen werden können.

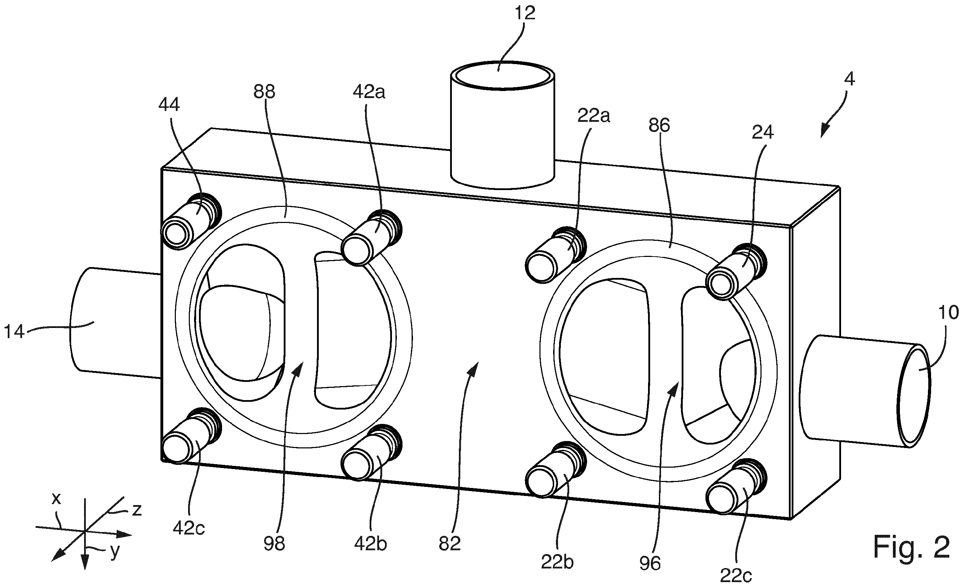

Figur 2 zeigt den Mehrwege-Ventilkörper 4 in perspektivischer Ansicht ohne die Ventilantriebe 6 und 8. Eine Oberfläche 82 ist durch zwei Öffnungen 86 und 88 unterbrochen. Die Öffnungen 86 und 88 geben die Sicht auf die jeweiligen Ventilsitze 96 und 98 frei. Die Öffnungen 86 und 88 werden umfangsseitig mittels der zugeordneten verklemmten Membran fluiddicht verschlossen. Gleich weit voneinander beabstandet sind die Stehbolzen 22a bis 22c und 24 um die Öffnung 86 herum angeordnet. Gleich weit voneinander beabstandet sind die Stehbolzen 44a bis 42c und 44 um die Öffnung 88 herum angeordnet.

Selbstverständlich kann der Mehrwege-Ventilkörper 4 weitere Öffnungen und zugeordnete Ventilsitze sowie weitere Anschlüsse umfassen und für eine kundenseitige Anwendung angepasst sein. Entsprechend sind auch komplex gestaltete Mehrwege-Ventilkörper 4 von dieser Beschreibung erfasst.

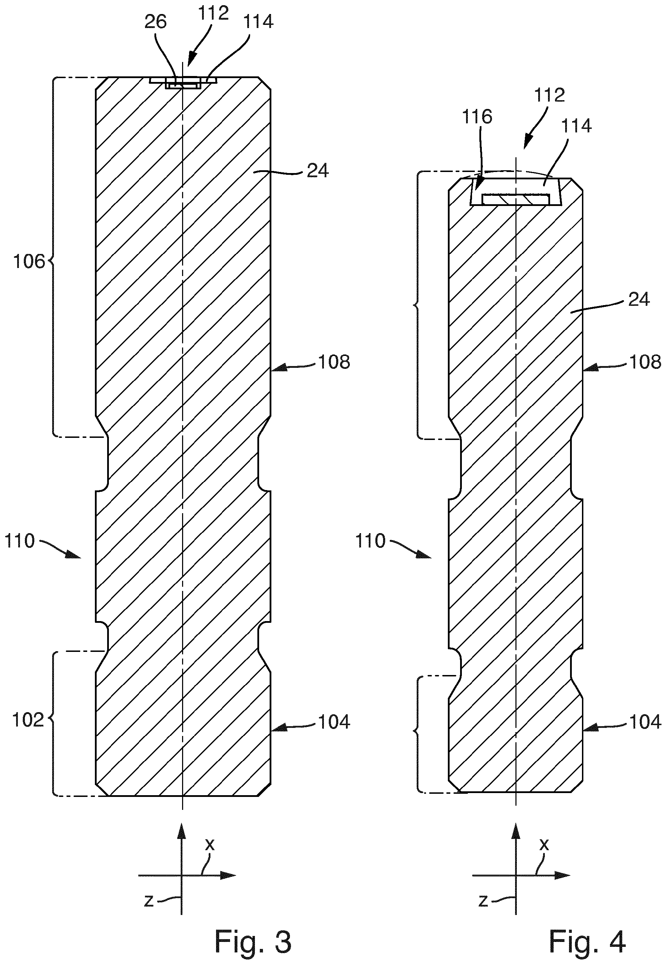

Die Figuren 3 und 4 zeigen eine Schnittansicht einer jeweiligen Ausführungsform des Stehbolzens 24. Der Stehbolzen 44 ist analog aufgebaut. Der Stehbolzen 24 weist einen ersten distalen Abschnitt 102 mit einem ersten Außengewinde 104 auf. Ein zweiter distaler Abschnitt 106 weist ein zweites Außengewinde 108 auf. Ein Zwischenabschnitt 110 entkoppelt die beiden distalen Abschnitte 102 und 106 funktional. Der distale Abschnitt 106 weist eine distale Ausnehmung 112 auf, welche mit einer Schutzschicht 114 verschlossen ist.

In Figur 3 ist die distale Ausnehmung 112 zweistufig ausgeführt und der elektronische Datenträger 26 ist in der proximalen Stufe angeordnet. Die distale Stufe ermöglicht vorteilhaft eine verbesserte Anhaftung der Schutzschicht 114. In Figur 4 umfasst die distale Ausnehmung 112 einen sich in proximaler Richtung vergrößernden Hinterschnitt 116. Der Hinterschnitt 116 ermöglicht vorteilhaft, dass die Schutzschicht 114 formschlüssig in der Ausnehmung 112 angeordnet ist.

Der elektronische Datenträger 26 wird zur Herstellung des Stehbolzens 24 zunächst in die Ausnehmung 112 eingebracht und an dessen Boden angeordnet und optional mit diesem verklebt. Anschließend wird eine Vergussmasse wie beispielsweise Epoxidharz in die Ausnehmung 112 eindosiert. Die eindosierte Vergussmasse wird anschließend während einer Aushärtungsdauer von mindestens 10 Minuten, insbesondere mindestens 15 Minuten in einem Ofen bei einer Aushärtungstemperatur oberhalb von 100 °C, insbesondere oberhalb von 130 °C, ausgehärtet. In einer weiteren Ausführungsform wird der Stehbolzen 24 bei 150° eine Stunde im Ofen ausgehärtet. Damit ist die distale Ausnehmung 112 fluiddicht mit der Schutzschicht 114 verschlossen. Gleichzeitig ist Schutzschicht 114 nicht elektrisch leitfähig und nicht magnetisierbar, wodurch sich der elektronische Datenträger 26 durch die Schutzschicht 114 hindurch drahtlos ansprechen lässt.

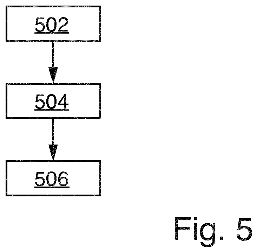

Figur 5 zeigt ein schematisches Ablaufdiagramm zur Herstellung des Mehrwege-Ventilkörpers 4. Vor Durchführung der nachfolgend genannten Schritte ist der Mehrwege-Ventilkörper 4 bereits mit einem Ventilsitz 96, 98 ausgeführt, welche über eine jeweilige Öffnung 86, 88 zugänglich ist. In einem ersten Schritt 502 werden eine Anzahl von Gewindebohrungen um die jeweilige Öffnung 86, 88 herum ausgeführt. In einem zweiten Schritt 504 wird eine Anzahl erster Stehbolzen 22a, 24b, 22c und/oder eine Anzahl dritter Stehbolzen 42a, 42b, 42c abschnittsweise in den Gewindebohrungen angeordnet. In einem dritten Schritt 506 wird ein zweiter Stehbolzen 24 und/oder ein vierter Stehbolzen 44 abschnittsweise in einer der Gewindebohrungen angeordnet.

## Patentansprüche

1. Ein Mehrwege-Ventilkörper (4) für eine Ventilanordnung (2), wobei der Mehrwege-Ventilkörper (4) eine Anzahl von Ventilsitzen (96, 98) umfasst, welche über eine jeweilige Öffnung (86, 88) zugänglich sind, wobei eine Anzahl von Gewindebohrungen um die jeweilige Öffnung (86, 88) herum ausgeführt sind, wobei eine Anzahl von Stehbolzen (22a-c; 24) zur Anordnung eines Ventilantriebs (6, 8) an der jeweiligen Öffnung (6, 8) abschnittsweise in den Gewindebohrungen angeordnet sind, **dadurch gekennzeichnet, dass** zumindest einer der der jeweiligen Öffnung (86; 88) zugeordneten Stehbolzen (24) einen elektronischen Datenträger (26) zur kontaktlosen Identifikation des jeweiligen Ventilsitzes (96, 98) umfasst.

2. Der Mehrwege-Ventilkörper (4) nach dem Anspruch 1, wobei der den elektronischen Datenträger (26; 46) umfassende Stehbolzen (24; 44) eine distale Ausnehmung (112) umfasst, wobei innerhalb der distalen Ausnehmung (112) der elektronische Datenträger (26; 46) angeordnet ist, und wobei die distale Ausnehmung (112) mit einer Schutzschicht (114) verschlossen ist.

3. Der Mehrwege-Ventilkörper (4) nach dem Anspruch 2, wobei der den elektronischen Datenträger (26; 46) umfassende Stehbolzen (24; 44) in einem ersten distalen Abschnitt (102) ein erstes Außengewinde (104) umfasst, wobei ein zweiter distaler Abschnitt (106) ein zweites Außengewinde (106) und die distale Ausnehmung (112) umfasst, und wobei der erste distale Abschnitt (104) des den elektronischen Datenträger (26; 46) umfassenden Stehbolzens (24; 44) in der zugeordneten Gewindebohrung des Mehrwege-Ventilkörpers (4) aufgenommen ist.

4. Der Mehrwege-Ventilkörper (4) nach einem der vorstehenden Ansprüche, wobei die distale Ausnehmung (112) zweistufig ausgeführt ist, und wobei der elektronische Datenträger (26) in der proximalen Stufe der distalen Ausnehmung (112) angeordnet ist.

5. Der Mehrwege-Ventilkörper (4) nach einem der Ansprüche 1 bis 3, wobei die distale Ausnehmung (112) einen sich in proximaler Richtung vergrößernden Hinterschnitt (116) umfasst.

6. Der Mehrwege-Ventilkörper (4) nach einem der vorstehenden Ansprüche, wobei der elektronische Datenträger (26) ein RFID-Chip ist.

7. Der Mehrwege-Ventilkörper (4) nach einem der vorstehenden Ansprüche, wobei der RFID-Chip scheibenförmig ausgebildet ist.

8. Ein Verfahren zur Herstellung eines Mehrwege-Ventilkörpers (4) für eine Ventilanordnung (2), wobei der Mehrwege-Ventilkörper (4) eine Anzahl von Ventilsitzen (96, 98) umfasst, welche über eine Öffnung (86, 88) zugänglich sind, das Verfahren umfassend:
- Ausführen (502) einer Anzahl von Gewindebohrungen um die jeweilige Öffnung (86, 88) herum,
- abschnittsweise Anordnung (504) einer Anzahl von Stehbolzen (22a-c, 24) zur Anordnung eines Ventilantriebs (6, 8) in den Gewindebohrungen, **dadurch gekennzeichnet,**
- **dass** zumindest einer der der jeweiligen Öffnung (86; 88) zugeordneten Stehbolzen (24) einen elektronischen Datenträger (26) zur kontaktlosen Identifikation des jeweiligen Ventilsitzes (96, 98) umfasst, und dass das Verfahren umfasst:
- Anordnen (506) der den elektronischen Datenträger (26) umfassenden Stehbolzen (24) in einer der der jeweiligen Öffnung (86; 88) zugeordneten Gewindebohrungen.

9. Das Verfahren nach dem Anspruch 8, welches zur Herstellung des Mehrwege-Ventilkörpers (4) nach einem der Ansprüche 2 bis 7 ausgebildet ist.

## Claims

1. A multipath valve body (4) for a valve arrangement (2), the multipath valve body (4) comprising a plurality of valve seats (96, 98) which are accessible via a respective opening (86, 88), wherein a plurality of threaded bores are created around the respective opening (86, 88), wherein sections of a plurality of stud bolts (22a-c; 24) are arranged in the threaded bores for arrangement of a valve drive (6, 8) on the respective opening (6, 8), **characterised in that** at least one of the stud bolts (24) assigned to the respective opening (86; 88) comprises an electronic data carrier (26) for contactless identification of the respective valve seat (96, 98).

2. The multipath valve body (4) according to claim 1, wherein the stud bolt (24; 44) comprising the electronic data carrier (26; 46) has a distal recess (112), wherein the electronic data carrier (26; 46) is arranged within the distal recess (112), and wherein the distal recess (112) is sealed with a protective layer (114).

3. The multipath valve body (4) according to claim 2, wherein the stud bolt (24; 44) comprising the electronic data carrier (26; 46) is provided with a first outer thread (104) in a first distal section (102), wherein a second distal section (106) is provided with a second outer thread (106) and the distal recess (112), and wherein the first distal section (104) of the stud bolt (24; 44) comprising the electronic data carrier (26; 46) is accommodated in the associated threaded bore of the multipath valve body (4).

4. The multipath valve body (4) according to one of the preceding claims, wherein the distal recess (112) is formed in two steps, and wherein the electronic data carrier (26) is arranged in the proximal step of the distal recess (112).

5. The multipath valve body (4) according to one of the claims 1 to 3, wherein the distal recess (112) is provided with an undercut (116) widening in the proximal direction.

6. The multipath valve body (4) according to one of the preceding claims, wherein the electronic data carrier (26) is an RFID chip.

7. The multipath valve body (4) according to one of the preceding claims, wherein the RFID chip is disc-formed.

8. A method for producing a multipath valve body (4) for a valve arrangement (2), the multipath valve body (4) comprising a plurality of valve seats (96, 98) which are accessible via an opening (86, 88), the method comprising:
- creating (502) a plurality of threaded bores around the respective opening (86, 88),
- arranging (504) sections of a plurality of stud bolts (22a-c, 24) in the threaded bores for arrangement of a valve drive (6, 8),
**characterised in that**
- at least one of the stud bolts (24) assigned to the respective opening (86; 88) comprises an electronic data carrier (26) for contactless identification of the respective valve seat (96, 98), and that the method comprises:
- arranging (506) the stud bolt (24) comprising the electronic data carrier (26) in one of the threaded bores assigned to the respective opening (86; 88).

9. The method according to claim 8 which is designed to produce the multipath valve body (4) according to one of the claims 2 to 7.

## Revendications

1. Corps de soupape multivoies (4) pour un agencement de soupapes (2), dans lequel le corps de soupape multivoies (4) comprend un certain nombre de sièges de soupape (96, 98) accessibles par l'intermédiaire d'un orifice (86, 88) respectif, dans lequel un certain nombre d'alésages filetés sont réalisés autour de l'orifice (86, 88) respectif, dans lequel un certain nombre de boulons d'ancrage (22a à c; 24) destinés à l'agencement d'une commande de soupape (6, 8) au niveau de l'orifice (6, 8) respectif sont agencés par sections dans les alésages filetés, **caractérisé en ce qu'**au moins un des boulons d'ancrage (24) associés à l'orifice (86; 88) respectif comprend un support de données électronique (26) destiné à l'identification sans contact du siège de soupape (96, 98) respectif.

2. Corps de soupape multivoies (4) selon la revendication 1, dans lequel le boulon d'ancrage (24; 44) comprenant le support de données électronique (26; 46) comprend un évidement distal (112), dans lequel le support de données électronique (26; 46) est agencé à l'intérieur de l'évidement distal (112), et dans lequel l'évidement distal (112) est fermé par une couche protectrice (114).

3. Corps de soupape multivoies (4) selon la revendication 2, dans lequel le boulon d'ancrage (24; 44) comprenant le support de données électronique (26; 46) comprend un premier filetage externe (104) dans une première section distale (102), dans lequel une seconde section distale (106) comprend un second filetage externe (106) et l'évidement distal (112), et dans lequel la première section distale (104) du boulon d'ancrage (24; 44) comprenant le support de données électronique (26; 46) est accueillie dans l'alésage fileté associé du corps de soupape multivoies (4).

4. Corps de soupape multivoies (4) selon l'une quelconque des revendications précédentes, dans lequel l'évidement distal (112) est réalisé de manière bi-étagée, et dans lequel le support de données électronique (26) est agencé dans l'étage proximal de l'évidement distal (112).

5. Corps de soupape multivoies (4) selon l'une quelconque des revendications 1 à 3, dans lequel l'évidement distal (112) comprend une contre-dépouille (116) s'agrandissant dans la direction proximale.

6. Corps de soupape multivoies (4) selon l'une quelconque des revendications précédentes, dans lequel le support de données électronique (26) est une puce RFID.

7. Corps de soupape multivoies (4) selon l'une quelconque des revendications précédentes, dans lequel la puce RFID est réalisée en forme de disque.

8. Procédé de fabrication d'un corps de soupape multivoies (4) pour un agencement de soupapes (2), dans lequel le corps de soupape multivoies (4) comprend un certain nombre de sièges de soupape (96, 98) accessibles par l'intermédiaire d'un orifice (86, 88), ledit procédé comprenant les étapes consistant à:
- réaliser (502) un certain nombre d'alésages filetés autour de l'orifice (86, 88) respectif,
- agencer (504) par sections un certain nombre de boulons d'ancrage (22a à c, 24) destinés à l'agencement d'une commande de soupape (6, 8) dans les alésages filetés,
**caractérisé en ce que**
- au moins un des boulons d'ancrage (24) associés à l'orifice (86; 88) respectif comprend un support de données électronique (26) destiné à l'identification sans contact du siège de soupape (96, 98) respectif, et **en ce que** ledit procédé comprend l'étape consistant à:
- agencer (506) le boulon d'ancrage (24) comprenant le support de données électronique (26) dans un des alésages filetés associés à l'orifice (86; 88) respectif.

9. Procédé selon la revendication 8, destiné à la production du corps de soupape multivoies (4) selon l'une quelconque des revendications 2 à 7.
